# EUROPÄISCHE PATENTSCHRIFT

(11) **EP 0 886 665 B1**
(45) Veröffentlichungstag und Bekanntmachung des Hinweises auf die Patenterteilung: **27.12.2000**
(21) Anmeldenummer: 97906155.3
(22) Anmeldetag: 03.03.1997
(51) Int. Cl.: C08J 9/14

(54) **VERFAHREN ZUR HERSTELLUNG KOHLENWASSERSTOFF-GETRIEBENER POLYURETHAN-HARTSCHAUMSTOFFE**
METHOD OF PRODUCING HYDROCARBON-EXPANDED RIGID POLYURETHANE FOAMS
PROCEDE DE PRODUCTION DE MOUSSES RIGIDES DE POLYURETHANNE EXPANSEES AUX HYDROCARBURES

(30) Priorität: 15.03.1996 DE 19610262
(43) Veröffentlichungstag der Anmeldung: 30.12.1998
(73) Patentinhaber: BAYER AG, 51368 Leverkusen (DE)
(72) Erfinder: EISEN, Norbert, D-50999 Köln (DE); HEINEMANN, Torsten, D-51065 Köln (DE); McCULLOUGH, Dennis, D-51069 Köln (DE); KLÄN, Walter, D-51373 Leverkusen (DE)
(86) Internationale Anmeldenummer: EP9701060
(87) Internationale Veröffentlichungsnummer: WO9734946

(56) Entgegenhaltungen:
- EP-A- 0 728 783
- EP-A- 0 739 918
- WO-A-94/03515
- US-A- 5 451 615

## Beschreibung

Es ist bekannt, Polyurethan-Hartschaumstoffe mit niedrig siedenden Alkanen zu treiben. Mit Vorteil werden hier cyclische Alkane verwendet, die aufgrund ihrer niedrigen Gaswärmeleitfähigkeit einen hervorragenden Beitrag zur Wärmeleitfähigkeit des Schaumstoffes leisten. Hierbei wird bevorzugt Cyclopentan verwendet.

Den guten Eigenschaften bei der Anwendung als Dämmstoff für Kühlmöbel stehen negative kommerzielle Aspekte gegenüber. So muß aufgrund der Lösungsmitteleigenschaften von Cyclopentan eine bestimmte Polystyrolinnenbehälterqualität verwendet werden.

Cyclopentan hat desweiteren aufgrund seines relativ hohen Siedepunktes von 49°C den Nachteil, daß es bei tiefen Temperaturen, wie sie bei der Anwendung von Polyurethan-Hartschaumstoff als Dämmstoff bei Kühlmöbeln üblich sind, kondensiert. Durch die unerwünschte Kondensation des Treibmittels wird ein Unterdruck in der Zelle erzeugt, der wiederum durch erhöhte Schaumfestigkeit bzw. erhöhte Rohdichte aufgefangen werden muß.

Verglichen mit den acyclischen homologen Pentanverbindungen - n- und i-Pentan - weist Cyclopentan höhere Herstellkosten auf. n- oder i-Pentan-getriebene Systeme sind seit längerem für Polyurethan-Hartschaumstoffe bekannt. Nachteilig sind jedoch die im Vergleich zu Cyclopentan höheren Gaswärmeleitfähigkeiten, die in einem schlechteren Wärmedämmvermögen entsprechend geschäumter Systeme resultieren.

Aufgabe der vorliegenden Erfindung war es, einen n- oder i-Pentan-getriebenen Hartschaumstoff zu entwickeln, bei dem die oben genannten Nachteile überwunden und insbesondere niedrige Wärmeleitfähigkeiten erzielt werden.

Überraschenderweise wurde nun gefunden, daß Polyolformulierungen auf Basis von bestimmten Polyethern und Polyisocyanaten, die gegenüber n- oder i-Pentan als Treibmittel eine bestimmte Grenzflächenspannung aufweisen. Schaumstoffe mit besonders niedrigen Wärmeleitfähigkeiten liefern.

Gegenstand der Erfindung ist ein Verfahren zur Herstellung von Polyurethan Hartschaumstoffen aus Polyolen und Polyisocyanaten sowie Treibmitteln und gegebenenfalls Schaumhilfsmitteln, dadurch gekennzeichnet, daß der Polyurethan Hartschaumstoff erhalten wird durch Umsetzung von
A) einer im Mittel mindestens 3 Wasserstoffatome aufweisenden Polyolkomponente, enthaltend
   1. 60 bis 100 % von mindestens 2 Hydroxylgruppen aufweisenden Polyethern vom Molekulargewicht 250 bis 1.500, erhalten durch Polyaddition von 70 bis 100 Gew.-% Ethylenoxid und 0 bis 30 Gew.-% Propylenoxid an Starterverbindungen und/oder Polyestern vom Molekulargewicht 250 bis 1.500, die gegenüber i- und/oder n-Pentan als Treibmittel eine Grenzflächenspannung von 6 bis 14 mN/m aufweisen,
   2. i- und/oder n-Pentan als Treibmittel,
   3. Wasser und
   4. gegebenenfalls Hilfs- und Zusatzstoffen
   mit
B) einem Polyisocyanat mit einem NCO-Gehalt von 20 bis 48 Gew.-%, welches gegenüber i- und/oder n-Pentan als Treibmittel eine Grenzflächenspannung von 4,0 bis 8 mN/m aufweist.

Bevorzugt sind Sorbitol gestartete Polyether vom Molekulargewicht 500 bis 1.400 auf Basis von 70 bis 100 Gew.-% Ethylenoxid und 0 bis 30 Gew.-% 1,2-Propylenoxid; Sucrose gestartete Polyether vom Molekulargewicht 500 bis 1.400 auf Basis von 70 bis 100 Gew.-% Ethylenoxid und 0 bis 30 Gew.-% 1,2-Propylenoxid; Trimethylolpropan gestartete Polyether vom Molekulargewicht 250 bis 850 auf Basis von 70 bis 100 Gew.-% Ethylenoxid und 0 bis 30 Gew.-% 1,2-Propylenoxid; Glycerin gestartete Polyether vom Molekulargewicht 250 bis 850 auf Basis von 70 bis 100 Gew.-% Ethylenoxid und 0 bis 30 Gew.-% 1,2-Propylenoxid; o-Toluylendiamin gestartete Polyether vom Molekulargewicht 250 bis 850 auf Basis von 70 bis 100 Gew.-% Ethylenoxid und 0 bis 30 Gew.-% 1,2-Propylenoxid.

Polyolformulierungen enthalten erfindungsgemäß vorzugsweise Polyester vom Molekulargewicht 200 bis 600 aus aromatischen und aliphatischen Dicarbonsäuren und mindestens 2 Hydroxylgruppen aufweisenden Polyolen. Beispiele für Dicarbonsäuren sind Phthalsäure bzw. Phthalsäureanhydrid, Terephthalsäure, Isophthalsäure, Malonsäure und Bernsteinsäure. Als Alkoholkomponente zur Veresterung werden vorzugsweise verwendet: Ethylenglykol, Di-, Tri-, Tetraethylenglykol bzw. Mischungen daraus.

Polyolformulierungen können erfindungsgemäß auch Polyether-ester enthalten, wie sie z.B. durch Reaktion von Phthalsäureanhydrid mit Diethylenglykol und nachfolgend mit Ethylenoxid erhältlich sind (EP-A 0 250 967).

Die Polyether und Polyester weisen erfindungsgemäß gegenüber n- und/oder i-Pentan vorzugsweise eine Grenzflächenspannung von 6 bis 14 mN/m, besonders bevorzugt von 10 bis 13 auf.

In Polyolformulierungen haben diese Produkte bevorzugt einen Anteil von 60 bis 100 %, besonders bevorzugt von 80 bis 90 %.

Polyisocyanate sind vorzugsweise endständige NCO-Gruppen enthaltende Prepolymere.

Als Isocyanat-Komponente sind z.B. aromatische Polyisocyanate, wie sie z.B. von W. Siefken in Justus Liebigs Annalen der Chemie, 562, Seiten 75 bis 136, beschrieben werden, beispielsweise solche der Formel

Q(NCO)ₙ,

in der
- n: 2 bis 4, vorzugsweise 2 und
- Q: einen aliphalischen Kohlenwasserstoffrest mit 2 bis 18, vorzugsweise 6 bis 10, C-Atomen, einen cycloaliphatischen Kohlenwasserstoffrest mit 4 bis 15, vorzugsweise 5 bis 10, C-Atomen, einem aromatischen Kohlenwasserstoffrest mit 8 bis 15, vorzugsweise 8 bis 13, C-Atomen bedeuten, z.B. solche Polyisocyanate, wie sie in der DE-OS 2 832 253, Seiten 10 bis 11, beschrieben werden.

Besonders bevorzugt werden in der Regel die technisch leicht zugänglichen Polyisocyanate, z.B. das 2,4- und 2,6-Toluylendiisocyanat sowie beliebige Gemische dieser Isomeren ("TDI"), Polyphenylpolymethylenpolyisocyanate, wie sie durch Anilin-Formaldehyd-Kondensation und anschließende Phosgenierung hergestellt werden ("rohes MDI") und Carbodiimidgruppen, Urethangruppen, Allophanatgruppen, Isocyanuratgruppen, Harnstoffgruppen oder Biuretgruppen aufweisende Polyisocyanate ("modifizierte Polyisocyanate", insbesondere modifizierte Polyisocyanate, die sich vom 2,4- und 2,6-Toluylendiisocyanat bzw. vom 4,4'-und/oder 2,4'-Diphenylmethandiisocyanat ableiten.

Ausgangskomponenten für die Prepolymere sind organische Verbindungen mit mindestens einer Hydroxylgruppe.

Bevorzugt sind 1 bis 4 Hydroxylgruppen aufweisende Polyol- oder Polyesterkomponenten vom Molekulargewicht 60 bis 1.400.

Bevorzugt werden Polyester vom Molekulargewicht 200 bis 600 auf Basis von aromatischen und/oder aliphatischen Dicarbonsäuren und Polyether vom Molekulargewicht 60 bis 1.400, erhalten durch Polyaddition von 70 bis 100 Gew.-% Ethylenoxid und 0 bis 30 Gew.-% 1,2-Propylenoxid, an Starterverbindungen wie Ethylenglykol, Trimethylolpropan und Glycerin.

Besonders bevorzugt sind Produkte aus Phthalsäureanhydrid mit Diethylenglykol und/oder Ethylenglykol.

Besonders bevorzugt sind auch Polyether-ester mit einem Molekulargewicht von 300 bis 450, wie sie z.B. durch Reaktion von Phthalsäureanhydrid mit Diethylenglykol und nachfolgend mit Ethylenoxid erhältlich sind (EP-A 0 250 967).

Prepolymere weisen erfindungsgemäß gegenüber n- und/oder i-Pentan vorzugsweise eine Grenzflächenspannung von 4,5 bis 8 mN/m, besonders bevorzugt von 5 bis 7 mN/m auf.

Paraffine oder Fettalkohole oder Dimethylpolysiloxane sowie Pigmente oder Farbstoffe, ferner Stabilisatoren gegen Alterungs- und Witterungseinflüsse, Weichmacher und fungistatisch und bakteriostatisch wirkende Substanzen sowie Füllstoffe wie Bariumsulfat, Kieselgur, Ruß oder Schlämmkreide, können mitverwendet werden.

Weitere Beispiele von gegebenenfalls erfindungsgemäß mitzuverwendenden oberflächenaktiven Zusatzstoffen und Schaumstabilisatoren sowie Zellreglem, Reaktionsverzögerern, Stabilisatoren, flammhemmenden Substanzen, Farbstoffen und Füllstoffen sowie fungistatisch und bakteriostatisch wirksamen Substanzen wie Einzelheiten über Verwendungs- und Wirkungsweise dieser Zusatzmittel sind im Kunststoff-Handbuch, Band VII, herausgegeben von Vieweg und Höchtlen, Carl-Hanser-Verlag, München 1966, z.B. auf den Seiten 121 bis 205, beschrieben.

Bei der Schaumherstellung kann erfindungsgemäß die Verschäumung auch in geschlossenen Formen durchgeführt werden. Dabei wird das Reaktionsgemisch in eine Form eingetragen. Als Formmaterial kommt Metall, z.B. Aluminium, oder Kunststoff, z.B. Epoxidharz, in Frage. In der Form schäumt das schäumfähige Reaktionsgemisch auf und bildet den Formkörper. Die Formverschäumung kann dabei so durchgeführt werden, daß das Formteil an seiner Oberfläche Zellstruktur aufweist. Sie kann aber auch so durchgeführt werden, daß das Formteil eine kompakte Haut und einen zelligen Kern aufweist. Erfindungsgemäß geht man im erstgenannten Fall so vor, daß man in die Form so viel schäumfähiges Reaktionsgemisch einträgt, daß der gebildete Schaumstoff die Form gerade ausfüllt. Die Arbeitsweise im letztgenannten Fall besteht darin, daß man mehr schäumfähiges Reaktionsgemisch in die Form einträgt, als zur Ausfüllung des Forminneren mit Schaumstoff notwendig ist. Im letzteren Fall wird somit unter "overcharging" gearbeitet, eine derartige Verfahrensweise ist z.B. aus den US-PS 3 178 490 und 3 182 104 bekannt.

Gegenstand der Erfindung ist auch die Verwendung der erfindungsgemäß hergestellten Hartschaumstoffe als Zwischenschicht für Verbundelemente und zum Ausschaumen von Hohlräumen im Kühlmöbelhaus.

Vorzugsweise wird das erfindungsgemäße Verfahren zur Ausschäumung von Hohlräumen von Kühl- und Gefriergeräten verwendet.

Selbstverständlich können auch Schaumstoffe durch Blockverschäumung oder nach dem an sich bekannten Doppeltransportverfahren hergestellt werden.

Die nach der Erfindung erhältlichen Hartschaumstoffe finden Anwendung z.B. im Bauwesen sowie für die Dämmung von Fernwärmerohren und Containern.

Die folgenden Beispiele sollen die Erfindung erläutern, ohne sie jedoch in ihrem Umfang zu begrenzen.

Die Grenzflächenspannung wurde nach den Bestimmungen des Anhangs V der im Amtsblatt der Europäischen Gemeinschaft beschriebenen Richtlinie nach Richtlinie 92/69/EWG (17. Anpassung der Richtlinie 67/548/EWG) mit OECD-Ring-Methode unter Beachtung von GLP durchgeführt.

### Beispiel 1 (Vergleichsbeispiel)

### Rezeptur für Polyurethan-Hartschaumstoff

### Komponente A:

- 50 Gew.-Teile: Sucrose (80 Gew.-%), Propylenglykol-(20 Gew.-%)gestarteter Polyether vom Molekulargewicht 600, erhalten durch anionische Polyaddition mit 1,2-Propylenoxid (Grenzflächenspannung gegen n-Pentan: 4,4 mN/m)
- 25 Gew.-Teile: Trimethylolpropan gestarteter Polyether mit Molekulargewicht 430, erhalten durch anionische Polyaddition mit 1,2-Propylenoxid (Grenzflächenspannung gegen n-Pentan: 1,3 mN/m)
- 25 Gew.-Teile: Propylenglykol-gestarteter Polyether mit Molekulargewicht 1.000, erhalten durch anionische Polyaddition mit 1,2-Propylenoxid (Grenzflächenspannung gegen n-Pentan: 0,8 mN/m)
- 2,5 Gew.-Teile: Wasser
- 2,0 Gew.-Teile: Schaumstabilisator B 8423 (Fa. Goldschmidt)
- 2,0 Gew.-Teile: Aktivator Desmorapid 726b (Fa. Bayer AG)

### Komponente B:

- 125 Gew.-Teile: rohes MDI (NCO-Gehalt = 31,5 Gew.-%) (Grenzflächenspannung zu n-Pentan 3,3 mN/m)

100 Gew.-Teile der Komponente A wurden mit 11 Gew.-Teilen n-Pentan und
125 Gew.-Teilen der Komponenten B mittels eines Rührers (2.000 UpM) bei 20°C gemischt und in einer geschlossenen Form auf 34 kg/m³ verdichtet.

### Beispiel 2 (Vergleichsbeispiel)

### Rezeptur für Polyurethan-Hartschaumstoff

### Komponente A:

- 100 Gew.-Teile: Sorbit-gestarteter Polyether vom Molekulargewicht 640, erhalten durch anionische Polyaddition mit Ethylenoxid (Grenzflächenspannung gegen n-Pentan: 12,4 mN/m)
- 2,5 Gew.-Teile: Wasser
- 2,0 Gew.-Teile: Schaumstabilisator B 8423 (Fa. Goldschmidt)
- 2,0 Gew.-Teile: Aktivator Desmorapid 726b (Fa. Bayer AG)

### Komponente B:

- 168 Gew.-Teile: rohes MDI (NCO-Gehalt = 31,5 Gew.-%) (Grenzflächenspannung zu n-Pentan 3,3 mN/m)

100 Gew.-Teile der Komponente A wurden mit 11 Gew.-Teilen n-Pentan und
168 Gew.-Teilen der Komponenten B mittels eines Rührers (2.000 UpM) bei 20°C gemischt. Ein Schaumstoff konnte aufgrund von Kollaps nicht erhalten werden.

### Beispiel 3 (Vergleichsbeispiel)

### Rezeptur für Polyurethan-Hartschaumstoff

### Komponente A:

- 50 Gew.-Teile: Sucrose (80 Gew.-%), Propylenglykol-(20 Gew.-%)gestarteter Polyether vom Molekulargewicht 600, erhalten durch anionische Polyaddition mit 1,2-Propylenoxid (Grenzflächenspannung gegen n-Pentan 4,4 mN/m)
- 25 Gew.-Teile: Trimethylolpropan gestarteter Polyether mit Molekulargewicht 430, erhalten durch anionische Polyaddition mit 1,2-Propylenoxid (Grenzflächenspannung gegen n-Pentan: 1,3 mN/m)
- 25 Gew.-Teile: Propylenglykol-gestarteter Polyether mit Molekulargewicht 1.000, erhalten durch anionische Polyaddition mit 1,2-Propylenoxid (Grenzflächenspannung gegen n-Pentan: 0,8 mN/m)
- 2,5 Gew.-Teile: Wasser
- 2,0 Gew.-Teile: Schaumstabilisator B 8423 (Fa. Goldschmidt)
- 2,0 Gew.-Teile: Aktivator Desmorapid 726b (Fa. Bayer AG)

### Komponente B:

- 146 Gew.-Teile: Prepolymer mit NCO-Gehalt = 27 Gew.-%, erhalten durch Umsetzung von 92 Gew.-% rohem MDI (NCO-Gehalt = 31,5 Gew.-%) mit 8 Gew.-% Polyether-ester des Molekulargewichts 370 auf der Basis von Phthalsäureanhydrid, Diethylenglykol und Ethylenoxid.

100 Gew.-Teile der Komponente A wurden mit 11 Gew.-Teilen n-Pentan und
146 Gew.-Teilen der Komponenten B mittels eines Rührers (2.000 UpM) bei 20°C gemischt und in einer geschlossenen Form auf 34 kg/m³ verdichtet.

### Beispiel 4 (erfindungsgemäß)

### Rezeptur für Polyurethan-Hartschaumstoff

### Komponente A:

- 100 Gew.-Teile: Sorbit-gestarteter Polyether vom Molekulargewicht 640, erhalten durch anionische Polyaddition mit Ethylenoxid (Grenzflächenspannung gegen n-Pentan: 12,4 mN/m)
- 2,5 Gew.-Teile: Wasser
- 2,0 Gew.-Teile: Schaumstabilisator B 8423 (Fa. Goldschmidt)
- 2,0 Gew.-Teile: Aktivator Desmorapid 726b (Fa. Bayer AG)

### Komponente B:

- 196 Gew.-Teile: Prepolymer mit NCO-Gehalt = 27 Gew.-%, erhalten durch Umsetzung von 92 Gew.-% rohem MDI (NCO-Gehalt = 31,5 Gew.-%) mit 8 Gew.-% Polyether-ester des Molekulargewichts 370 auf der Basis von Phthalsäureanhydrid, Diethylenglykol und Ethylenoxid (Grenzflächenspannung gegen n-Pentan 5 mN/m).

100 Gew.-Teile der Komponente A wurden mit 11 Gew.-Teilen n-Pentan und
196 Gew.-Teilen der Komponenten B mittels eines Rührers (2.000 UpM) bei 20°C gemischt und in einer geschlossenen Form auf 34 kg/m³ verdichtet.

### Beispiel 5 (erfindungsgemäß)

### Komponente A:

- 80 Gew.-Teile: Sorbit-gestarteter Polyether vom Molekulargewicht 640, erhalten durch anionische Polyaddition mit Ethylenoxid (Grenzflächenspannung gegen n-Pentan: 12,4 mN/m)
- 20 Gew.-Teile: Polyether-ester des Molekulargewichts 370 auf der Basis von Phthalsäureanhydrid, Diethylenglykol und Ethylenoxid (Grenzflächenspannung gegen n-Pentan: 12,3 mN/m)
- 2,5 Gew.-Teile: Wasser
- 2,0 Gew.-Teile: Schaumstabilisator B 8423 (Fa. Goldschmidt)
- 2,0 Gew.-Teile: Aktivator Desmorapid 726b (Fa. Bayer AG)

### Komponente B:

- 193 Gew.-Teile: Prepolymer mit NCO-Gehalt = 25,5 Gew.-%, erhalten durch Umsetzung von 90 Gew.-% rohem MDI (NCO-Gehalt = 31,5 Gew.-%) mit 10 Gew.-% Polyether-ester des Molekulargewichts 355 auf der Basis von Phthalsäureanhydrid, Diethylenglykol (Grenzflächenspannung gegen n-Pentan 6,4 mN/m).

100 Gew.-Teile der Komponente A wurden mit 11 Gew.-Teilen n-Pentan und
193 Gew.-Teilen der Komponenten B mittels eines Rührers (2.000 UpM) bei 20°C gemischt und in einer geschlossenen Form auf 34 kg/m³ verdichtet.

Von den in den Beispielen 1 bis 5 hergestellten Schaumstoffplatten wurden die in der Tabelle dargelegten Prüfwerte erhalten.

| Beispiel | Wärmeleitzahl [mW/mK] gemäß DIN 52616, 24°C |
|---|---|
| 1 | 24 |
| 2 | Kollaps |
| 3 | 23,3 |
| 4 | 20,5 |
| 5 | 20,0 |

Wie die Beispiele 4 und 5 zeigen, können durch Kombination der erfindungsgemäßen Polyether und Polyisocyanate n-Pentan getriebene PUR-Hartschaumstoffe mit deutlich niedrigerer Wärmeleitzahl erhalten werden.

## Patentansprüche

1. Verfahren zur Herstellung von Polyurethan Hartschaumstoffen aus Polyolen und Polyisocyanaten sowie Treibmitteln und gegebenenfalls Schaumhilfsmitteln, dadurch gekennzeichnet, daß der Polyurethan Hartschaumstoff erhalten wird durch Umsetzung von
A) einer im Mittel mindestens 3 Wasserstoffatome aufweisenden Polyolkomponente, enthaltend
1. 60 bis 100 % von mindestens 2 Hydroxylgruppen aufweisenden Polyethern vom Molekulargewicht 250 bis 1.500, erhalten durch Polyaddition von 70 bis 100 Gew.-% Ethylenoxid und 0 bis 30 Gew.-% Propylenoxid an Starterverbindungen und/oder Polyestern vom Molekulargewicht 250 bis 1.500, die gegenüber i- und/oder n-Pentan als Treibmittel eine Grenzflächenspannung von 6 bis 14 mN/m aufweisen,
2. i- und/oder n-Pentan als Treibmittel,
3. Wasser und
4. gegebenenfalls Hilfs- und Zusatzstoffen
mit
B) einem Polyisocyanat mit einem NCO-Gehalt von 20 bis 48 Gew.-%, welches gegenüber i- und/oder n-Pentan als Treibmittel eine Grenzflächenspannung von 4,0 bis 8 mN/m aufweist.

2. Verfahren zur Herstellung von Polyurethan Hartschaumstoffen gemäß Anspruch 1, dadurch gekennzeichnet, daß ein Sorbitol gestarteter Polyether vom Molekulargewicht 500 bis 1.400 auf Basis von 70 bis 100 Gew.-% Ethylenoxid und 0 bis 30 Gew.-% 1,2-Propylenoxid verwendet wird.

3. Verfahren zur Herstellung von Polyurethan Hartschaumstoffen gemäß Anspruch 1, dadurch gekennzeichnet, daß ein Sucrose gestarteter Polyether vom Molekulargewicht 500 bis 1.400 auf Basis von 70 bis 100 Gew.-% Ethylenoxid und 0 bis 30 Gew.-% 1,2-Propylenoxid verwendet wird.

4. Verfahren zur Herstellung von Polyurethan Hartschaumstoffen gemäß Anspruch 1, dadurch gekennzeichnet, daß ein Trimethylolpropan gestarteter Polyether vom Molekulargewicht 250 bis 850 auf Basis 70 bis 100 Gew.-% Ethylenoxid und 0 bis 30 Gew.-% 1,2-Propylenoxid verwendet wird.

5. Verfahren zur Herstellung von Polyurethan Hartschaumstoffen gemäß Anspruch 1, dadurch gekennzeichnet, daß ein Glycerin gestarteter Polyether vom Molekulargewicht 250 bis 850 auf Basis 70 bis 100 Gew.-% Ethylenoxid und 0 bis 30 Gew.-% 1,2-Propylenoxid verwendet wird.

6. Verfahren zur Herstellung von Polyurethan Hartschaumstoffen gemäß Anspruch 1, dadurch gekennzeichnet, daß ein o-Toluylendiamin gestarteter Polyether vom Molekulargewicht 250 bis 850 auf Basis 70 bis 100 Gew.-% Ethylenoxid und 0 bis 30 Gew.-% 1,2-Propylenoxid verwendet wird.

7. Verfahren zur Herstellung von Polyurethan Hartschaumstoffen gemäß Anspruch 1, dadurch gekennzeichnet, daß ein Polyester vom Molekulargewicht 200 bis 600 aus aromatischen und aliphatischen Dicarbonsäuren und mindestens 2 Hydroxylgruppen aufweisenden Polyolen verwendet wird.

8. Verfahren zur Herstellung von Polyurethan Hartschaumstoffen gemäß Anspruch 1, dadurch gekennzeichnet, daß als Polyisocyanat ein endständige NCO-Gruppen aufweisendes Prepolymer mit einem NCO-Gehalt von 20 bis 33 Gew.-%, welches durch die Reaktion von
1. 4,4'-Diphenylmethandiisocyanat, gegebenenfalls im Gemisch mit 2,4- und 2,2-Isomeren und 0 bis 30 Gew.-% höherfunktionellen Anteilen, mit
2. einem Polyether vom Molekulargewicht 60 bis 1.400, erhalten durch Polyaddition von 70 bis 100 Gew.-% Ethylenoxid und 0 bis 30 Gew.-% 1,2-Propylenoxid erhalten wurde,
verwendet wird.

9. Verfahren zur Herstellung von Polyurethan Hartschaumstoffen gemäß Anspruch 1, dadurch gekennzeichnet, daß als Polyisocyanat ein endständige NCO-Gruppen aufweisendes Prepolymer mit einem NCO-Gehalt von 20 bis 33 Gew.-%, welches durch die Reaktion von
1. 4,4'-Diphenylmethandiisocyanat, gegebenenfalls im Gemisch mit 2,4- und 2,2-Isomeren und 0 bis 30 Gew.-% höherfunktionellen Anteilen, mit
2. einem Polyester vom Molekulargewicht 200 bis 600 auf Basis von aromatischen und aliphatischen Dicarbonsäuren und mindestens 2 Hydroxylgruppen aufweisenden Polyolen, erhalten wurde,
verwendet wird.

10. Verfahren zur Herstellung von Polyurethan Hartschaumstoffen gemäß Anspruch 1, dadurch gekennzeichnet, daß als Polyisocyanat ein endständig NCO-Gruppen aufweisendes Prepolymer mit einem NCO-Gehalt von 25 bis 45 Gew.-%, welches durch die Reaktion von
1. Toluylendiisocyanat, gegebenenfalls ein Gemisch aus 2,4- und 2,6-Isomeren und 0 bis 30 Gew.-% höherfunktionellen Anteilen mit
2. einem Polyether vom Molekulargewicht 60 bis 1.400, erhalten durch Polyaddition von 70 bis 100 Gew.-% Ethylenoxid und 0 bis 30 Gew.-% 1,2-Propylenoxid, an Starterverbindungen erhalten wurde,
verwendet wurde.

11. Verfahren zur Herstellung von Polyurethan Hartschaumstoffen gemäß Anspruch 1, dadurch gekennzeichnet, daß als Polyisocyanat ein endständige NCO-Gruppen aufweisendes Prepolymer mit einem NCO-Gehalt von 25 bis 45 Gew.-%, welches durch die Reaktion von
1. Toluylendiisocyanat, gegebenenfalls ein Gemisch aus 2,4- und 2,6-Isomeren und 0 bis 30 Gew.-% höherfunktionellen Anteilen mit
2. einem Polyester vom Molekulargewicht 200 bis 600 auf Basis von aromatischen und aliphatischen Dicarbonsäuren und mindestens 2 Hydroxylgruppen aufweisenden Polyolen erhalten wurde,
verwendet wird.

## Claims

1. A process for preparing polyurethane rigid foams from polyols and polyisocyanates as well as blowing agents and optionally foam auxiliary agents, characterised in that the polyurethane rigid foam is obtained by reacting
A) a polyol component with on average at least 3 hydrogen atoms, containing
1. 60 to 100 % of polyethers with a molecular weight of 250 to 1,500, obtainable by the polyaddition of 70 to 100 wt.% of ethylene oxide and 0 to 30 wt.% of propylene oxide to starter compounds and/or polyesters with at least 2 hydroxyl groups and a molecular weight of 250 to 1,500, which have a surface tension of 6 to 14 mN/m with respect to i-pentane and/or n-pentane as blowing agent,
2. i-pentane and/or n-pentane as blowing agent,
3. water and
4. optionally auxiliary agents and additives
with
B) a polyisocyanate with an NCO-content of 20 to 48 wt.% which has a surface tension of 4.0 to 8 mN/m with respect to i-pentane or n-pentane as blowing agent.

2. A process for preparing polyurethane rigid foams according to Claim 1, characterised in that a sorbitol started polyether with a molecular weight of 500 to 1,400 based on 70 to 100 wt.% of ethylene oxide and 0 to 30 wt.% of 1,2-propylene oxide is used.

3. A process for preparing polyurethane rigid foams according to Claim 1, characterised in that a sucrose started polyether with a molecular weight of 500 to 1,400 based on 70 to 100 wt.% of ethylene oxide and 0 to 30 wt.% of 1,2-propylene oxide is used.

4. A process for preparing polyurethane rigid foams according to Claim 1, characterised in that a trimethylolpropane started polyether with a molecular weight of 250 to 850 based on 70 to 100 wt.% of ethylene oxide and 0 to 30 wt.% of 1,2-propylene oxide is used.

5. A process for preparing polyurethane rigid foams according to Claim 1, characterised in that a glycerine started polyether with a molecular weight of 250 to 850 based on 70 to 100 wt.% of ethylene oxide and 0 to 30 wt.% of 1,2-propylene oxide is used.

6. A process for preparing polyurethane rigid foams according to Claim 1, characterised in that an otoluylene diamine started polyether with a molecular weight of 250 to 850 based on 70 to 100 wt.% of ethylene oxide and 0 to 30 wt.% of 1,2-propylene oxide is used.

7. A process for preparing polyurethane rigid foams according to Claim 1, characterised in that a polyester with a molecular weight of 200 to 600, formed from aromatic and aliphatic dicarboxylic acids and polyols with at least 2 hydroxyl groups, is used.

8. Aprocess for preparing polyurethane rigid foams according to Claim 1, characterised in that a prepolymer with an NCO content of 20 to 33 wt.% and with terminal NCO groups, which has been obtained by reacting
1. 4,4'-diphenylmethane diisocyanate, optionally in a mixture with the 2,4 and 2,2-isomers and 0 to 30 wt.% of higher functional fractions, with
2. a polyether with a molecular weight of 60 to 1,400 obtained by the polyaddition of 70 to 100 wt.% of ethylene oxide and 0 to 30 wt.% of 1,2-propylene oxide,
is used as the polyisocyanate.

9. A process for preparing polyurethane rigid foams according to Claim 1, characterised in that a prepolymer with an NCO content of 20 to 33 wt.% and with terminal NCO groups, which has been obtained by reacting
1. 4,4'-diphenylmethane diisocyanate, optionally in a mixture with the 2,4 and 2,2-isomers and 0 to 30 wt.% of higher functional fractions, with
2. a polyester with a molecular weight of 200 to 600 based on aromatic and aliphatic dicarboxylic acids and polyols with at least 2 hydroxyl groups,
is used as the polyisocyanate.

10. A process for preparing polyurethane rigid foams according to Claim 1, characterised in that a prepolymer with an NCO content of 25 to 45 wt.% and with terminal NCO groups which has been obtained by reacting
1. toluylene diisocyanate, optionally a mixture of the 2,4 and 2,6-isomers and 0 to 30 wt.% of higher functional fractions, with
2. a polyether with a molecular weight of 60 to 1,400 obtained by the polyaddition of 70 to 100 wt.% of ethylene oxide and 0 to 30 wt.% of 1,2-propylene oxide to starter compounds,
was used as the polyisocyanate.

11. A process for preparing polyurethane rigid foams according to Claim 1, characterised in that a prepolymer with an NCO content of 25 to 45 wt.% and with terminal NCO groups, which has been obtained by reacting
1. toluylene diisocyanate, optionally a mixture of the 2,4 and 2,6-isomers and 0 to 30 wt.% of higher functional fractions, with
2. a polyester with a molecular weight of 200 to 600 based on aromatic and aliphatic dicarboxylic acids and polyols with at least 2 hydroxyl groups,
is used as the polyisocyanate.

## Revendications

1. Procédé pour préparer des mousses rigides de polyuréthanne à partir de polyols et de polyisocyanates, d'agents porogènes et le cas échéant de produits auxiliaires de gonflement, caractérisé en ce que la mousse rigide de polyuréthanne est obtenue par réaction de
A) un composant polyol à au moins 3 atomes d'hydrogène en moyenne, qui contient
1. 60 à 100 % de polyéthers à au moins 2 groupes hydroxy, de poids moléculaire 250 à 1 500, obtenus par polyaddition de 70 à 100 % en poids d'oxyde d'éthylène et de 0 à 30 % en poids d'oxyde de propylène sur des composés de départ de la condensation et/ou de polyesters de poids moléculaire 250 à 1 500, ayant une tension interfaciale de 6 à 14 mN/m à l'égard de l'iso- et/ou du n-pentane servant d'agents porogènes,
2. de l'iso- et/ou du n-pentane en tant qu'agents porogènes,
3. de l'eau et
4. le cas échéant des produits auxiliaires et additifs,
avec
B) un polyisocyanate à une teneur en NCO de 20 à 48 % en poids, ayant une tension interfaciale de 4,0 à 8 mN/m par rapport à l'iso- et/ou au n-pentane servant d'agents porogènes.

2. Procédé de préparation de mousses rigides de polyuréthanne selon la revendication 1, caractérisé en ce que l'on utilise un polyéther condensé sur une mole de départ de sorbitol, de poids moléculaire 500 à 1 400, à base de 70 à 100 % en poids d'oxyde d'éthylène et de 0 à 30 % en poids d'oxyde de 1,2-propylène.

3. Procédé de préparation de mousses rigides de polyuréthanne selon la revendication 1, caractérisé en ce que l'on utilise un polyéther condensé sur une mole de départ de saccharose, de poids moléculaire 500 à 1 400, à base de 70 à 100 % en poids d'oxyde d'éthylène et de 0 à 30 % en poids d'oxyde de 1,2-propylène.

4. Procédé de préparation de mousses rigides de polyuréthanne selon la revendication 1, caractérisé en ce que l'on utilise un polyéther condensé sur triméthylolpropane, de poids moléculaire 250 à 850, à base de 70 à 100 % en poids d'oxyde d'éthylène et de 0 à 30 % en poids d'oxyde de 1,2-propylène.

5. Procédé de préparation de mousses rigides de polyuréthanne selon la revendication 1, caractérisé en ce que l'on utilise un polyéther condensé sur glycérol, de poids moléculaire 250 à 850, à base de 70 à 100 % en poids d'oxyde d'éthylène et de 0 à 30 % en poids d'oxyde de 1,2-propylène.

6. Procédé pour la préparation de mousses rigides de polyuréthanne selon la revendication 1, caractérisé en ce que l'on utilise un polyéther condensé sur o-toluylènediamine, de poids moléculaire 250 à 850, à base de 70 à 100 % en poids d'oxyde d'éthylène et de 0 à 30 % en poids d'oxyde de 1,2-propylène.

7. Procédé pour la préparation de mousses rigides de polyuréthanne selon la revendication 1, caractérisé en ce que l'on utilise un polyester de poids moléculaire 200 à 600, d'acides dicarboxyliques aromatiques et aliphatiques et de polyols à au moins 2 groupes hydroxy.

8. Procédé de préparation de mousses rigides de polyuréthanne selon la revendication 1, caractérisé en ce que l'on utilise en tant que polyisocyanate un prépolymère à groupes terminaux NCO, à une teneur en NCO de 20 à 33 % en poids, qui a été obtenu par réaction de
1. du 4,4'-diphénylméthanediisocyanate éventuellement en mélange avec les isomères 2,4 et 2,2 et 0 à 30 % en poids d'homologues à plus forte fonctionnalité, avec
2. un polyéther de poids moléculaire 60 à 1 400 obtenu par polyaddition de 70 à 100 % en poids d'oxyde d'éthylène et 0 à 30 % en poids d'oxyde de 1,2-propylène.

9. Procédé de préparation de mousses rigides de polyuréthanne selon la revendication 1, caractérisé en ce que l'on utilise en tant que polyisocyanate un prépolymère à groupes NCO terminaux, à une teneur en NCO de 20 à 33 % en poids, qui a été obtenu par réaction de
1. du 4,4'-diphénylméthanediisocyanate éventuellement en mélange avec les isomères 2,4 et 2,2 et 0 à 30 % en poids d'homologues à plus forte fonctionnalité, avec
2. un polyester de poids moléculaire 200 à 600, à base d'acides dicarboxyliques aromatiques et aliphatiques et de polyols à au moins 2 groupes hydroxy.

10. Procédé de préparation de mousses rigides de polyuréthanne selon la revendication 1, caractérisé en ce que l'on utilise en tant que polyisocyanate un prépolymère à groupes terminaux NCO, à une teneur en NCO de 25 à 45 % en poids, qui a été obtenu par réaction de
1. du toluylènediisocyanate, éventuellement en mélange avec les isomères 2,4 et 2,6 et 0 à 30 % en poids d'homologues à plus forte fonctionnalité, avec
2. un polyéther de poids moléculaire 60 à 1 400 obtenu par polyaddition de 70 à 100 % en poids d'oxyde d'éthylène et 0 à 30 % en poids d'oxyde de 1,2-propylène sur des composés de départ de la condensation.

11. Procédé de préparation de mousses rigides de polyuréthanne selon la revendication 1, caractérisé en ce que l'on utilise en tant que polyisocyanate un prépolymère à groupes NCO terminaux, à une teneur en NCO de 25 à 45 % en poids, qui a été obtenu par réaction de
1. du toluylènediisocyanate, éventuellement en mélange avec les isomères 2,4 et 2,6 et 0 à 30% en poids d'homologues à plus forte fonctionnalité, avec
2. un polyester de poids moléculaire 200 à 600, à base d'acides dicarboxyliques aromatiques et aliphatiques et de polyols à au moins 2 groupes hydroxy.
